# EUROPEAN PATENT APPLICATION

(11) **EP 4 841 840 A1**
(43) Date of publication of application: **18.11.2026**
(21) Application number: 25770223.3
(22) Date of filing: 09.09.2025
(51) Int. Cl.: H02H 3/05, H02H 3/033

(54) **POWER SUPPLY CIRCUIT, MONITORING METHOD THEREFOR, AND SERVER**

(30) Priority: 28.03.2025 CN 202510378507
(71) Applicant: Suzhou Metabrain Intelligent Technology Co., Ltd., Suzhou, Jiangsu 215000 (CN)
(72) Inventor: LIU, Yunli, Suzhou, Jiangsu 215000 (CN); SUN, Hui, Suzhou, Jiangsu 215000 (CN)
(74) Representative: Michalski Hüttermann & Partner mbB
(86) International application number: PCT/CN2025/120074
(87) International publication number: WO 2026/199842

(57) **Abstract**

This application discloses a power supply circuit, a monitoring method for the same, and a server, relating to the technical field of servers. The quantity of at least one first protection component provided in each power supply branch and its first protection threshold can be adjusted according to the power supply requirements of the load attached to the power node of that branch. This enables differentiated matching of each power supply branch to dynamic load demands, addressing the technical issues of false trips and failure to trip in protection assemblies. It ensures precise triggering of protective actions under different load conditions, thereby reducing the occurrence of false trips and missed trips, and achieving the technical effects of improving operational safety and reliability of the server.

## Description

### CROSS-REFERENCE TO RELATED APPLICATION

The present application claims priority to Chinese patent application No. 202510378507.9, entitled "POWER SUPPLY CIRCUIT, MONITORING METHOD FOR THE SAME, AND SERVER", filed on March 28, 2025 before the China National Intellectual Property Administration, which is incorporated herein in its entirety by reference.

### TECHNICAL FIELD

This application relates to the technical field of servers, and in particular, to a power supply circuit, a monitoring method for the same, and a server.

### BACKGROUND

With the rapid development of technologies such as cloud computing and artificial intelligence, the demand for server computing power has grown exponentially. The integration of high-power consumption devices such as multi-core CPUs (Central Processing Units), GPU (Graphics Processing Unit) clusters, and accelerator cards has significantly increased the power input of a single server. Therefore, server systems adopt a multi-channel independent power supply architecture to support the voltage and current requirements of different loads. To protect against abnormal circuit currents, disposable fuses or mechanical circuit breakers are added to the power supply branches as protection components. However, such devices have fixed protection thresholds and cannot dynamically adjust based on the real-time power consumption of the loads, leading to risks of over-protection or under-protection. Furthermore, fuses require manual replacement after activation, severely impacting the continuous operation of high-availability servers.

Therefore, how to provide a solution to the above technical problems is an issue that those skilled in the art need to solve at present.

### SUMMARY

The present application provides a power supply circuit, a monitoring method for the same, and a server, so as to at least solve the technical problems of false tripping and failure to trip in protection components with fixed protection thresholds in related technologies.

The present application provides a power supply circuit, including:
multiple power supply branches, wherein a first end of each of the power supply branches being connected to a power output end of a power source, and a second end of each of the power supply branches being connected to a corresponding power node;
at least one first protection component connected in series in each of the power supply branches, wherein the first protection component is configured to: detect power supply parameters of the power supply branch where the first protection component is located, and disconnect in response to a first signal; a quantity of first protection components in the power supply branch and a first protection threshold of the first protection component are determined based on power supply requirements of loads attached to the power node connected to the power supply branch; and
a control component connected to at least one first protection component in at least one power supply branch, wherein the control component is configured to output the first signal in response to the power supply parameter detected by the first protection component reaching the first protection threshold of the first protection component.

The present application further provides a monitoring method for the power supply circuit, applied to the power supply circuit described above. The power supply circuit includes multiple power supply branches. The monitoring method includes:
acquiring power supply parameters of the power supply branch, wherein the power supply parameters are detected by at least one first protection component connected in series in the power supply branch; and
in response to the power supply parameters detected by the first protection component reaching the first protection threshold of the first protection component, controlling the first protection component whose power supply parameters reach the first protection threshold to disconnect.

The present application further provides a server, including at least one power supply and the power supply circuit connected to the power source.

In the present application, the quantity of at least one first protection component provided in each power supply branch and the first protection threshold of the first protection component can be adjusted according to the power supply requirements of the load attached to the power node connected to the power node. This enables differentiated adaptation of respective branches to dynamic load demands, thereby resolving the technical issues of false trips and failure to trip in protection components. It ensures precise activation of protection mechanisms under varying load conditions, achieving the technical effects of reducing false and missed triggers while enhancing the operational safety and reliability of servers.

### BRIEF DESCRIPTION OF THE DRAWINGS

To illustrate embodiments of the present application more clearly, the accompanying drawings required in the embodiments will be briefly introduced below. Apparently, the drawings in the following description are only some embodiments of the present application. For those of skilled in the art, other drawings can also be obtained based on these drawings without creative work.
FIG. 1 is a schematic structural diagram of a first power supply circuit provided by an embodiment of the present application;
FIG. 2 is a schematic structural diagram of a detection module provided by an embodiment of the present application;
FIG. 3 is a schematic structural diagram of a second power supply circuit provided by an embodiment of the present application;
FIG. 4 is a schematic structural diagram of a third power supply circuit provided by an embodiment of the present application; and
FIG. 5 is a flowchart of a monitoring method for a power supply circuit provided by an embodiment of the present application.

### DETAILED DESCRIPTION OF THE EMBODIMENTS

The technical solutions in the embodiments of the present application will be clearly and completely described below in conjunction with the accompanying drawings of the embodiments of the present application. Apparently, the described embodiments are only part of the embodiments of the present application, rather than all the embodiments. Based on the embodiments in this application, all other embodiments obtained by those skilled in the art without creative work shall fall within the protection scope of this application.

It should be noted that, in the description of this application, the terms "include", "comprise" or any other variants thereof are intended to cover non-exclusive inclusion, so that a process, method, article or device including a series of elements not only includes those elements, but also includes other elements not explicitly listed, or also includes elements inherent in such process, method, article or device. The terms "first", "second" and the like in this application are used to distinguish similar objects, but not to describe a specific order or sequence.

In order to enable those skilled in the art to better understand the solution of the present application, the present application will be further described in detail below in conjunction with the accompanying drawings and specific implementation modes.

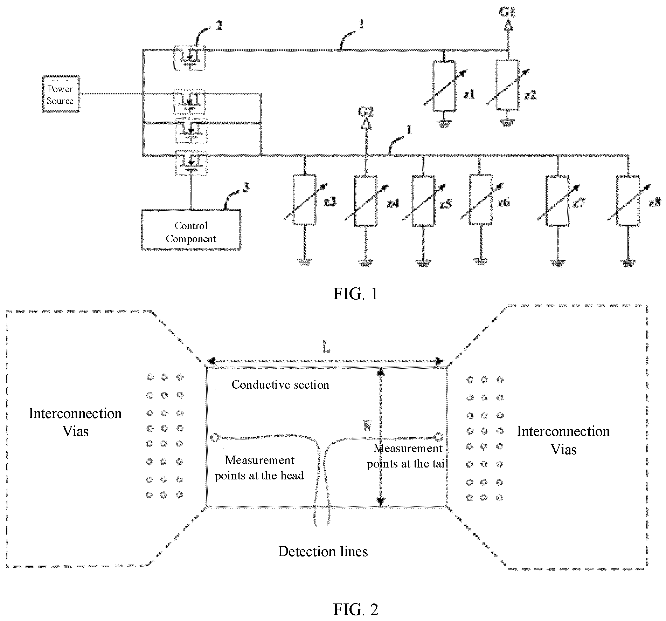

In a first aspect, the present application provides a power supply circuit. Referring to FIG. 1, the power supply circuit includes multiple power supply branches 1, at least one first protection component 2 and a control component 3.

A first end of each power supply branch 1 is connected to a power output end of a power source, and a second end of each power supply branch 1 is connected to a corresponding power node.

The first protection component 2 is connected in series in the power supply branch 1. The first protection component 2 is configured to detect power supply parameters of the power supply branch 1 where the first protection component is located, and disconnect the power supply branch 1 in response to a first signal. The quantity of first protection components 2 in the power supply branch 1 and a first protection threshold of the first protection components are determined based on the power supply requirements of the load attached to the power node connected to the power supply branch 1.

The control component 3 is connected to at least one first protection component 2 in at least one power supply branch 1, and the control component 3 is configured to output the first signal when the power supply parameter detected by the first protection component 2 reaches the first protection threshold of the first protection component 2.

In this embodiment, the server includes a power source. The power output end of the power source is connected to different power nodes (for example, a first power node G1 and a second power node G2 as shown in FIG. 1) through a plurality of independent power supply branches 1. Each power node is connected with at least one load. Accordingly, the power supply circuit of the power source in this embodiment includes multiple power supply branches 1. FIG. 1 shows 8 loads, that is, first load z1 and second load z2 connected to the first power node G1, and third load z3, fourth load z4, fifth load z5, sixth load z6, seventh load z7 and eighth load z8 connected to the second power node G2.

Each power supply branch 1 includes at least one first protection component 2, and the first protection component 2 has its own first protection threshold. The quantity of first protection components 2 in each power supply branch 1 and the first protection threshold of the first protection component are determined based on the power supply requirements of the load attached to the power node connected to the rear end of the power supply branch 1, so that protection components can be flexibly set for different branches according to the load characteristics (such as power level, current demand, etc.) of the branches, thereby achieving differentiated protection. For example, for loads with high power demand, the quantity of protection components can be increased or the threshold of protection components can be adjusted, so that the power supply will not be cut off due to misoperation of the protection components in the case of high load; while for loads with low power demand, the protection threshold can be appropriately reduced to improve the sensitivity of protection. The first protection component 2 is configured to detect the power supply parameter of the power supply branch 1 where it is located, and transmit the power supply parameter to the control component 3. When determining that the power supply parameter of the power supply branch 1 reaches the first protection threshold of the first protection component 2, the control component 3 triggers a protection action and outputs the first signal. Thus, the first protection component 2 is driven by the first signal to disconnect the power supply branch 1, thereby cutting off the power supply to the power node at the rear end of the power supply branch 1. The control component 3 is connected to at least one first protection component 2 in at least one power supply branch 1. When the first protection component 2 detects that the power supply parameter reaches its first protection threshold, the control component 3 will output the first signal to trigger the protection action.

In related technologies, protection components often adopt fixed thresholds and configurations, which can easily lead to false tripping (tripping when it should not) or failure to trip (not tripping when it should) when the load changes. Differentiated configurations are adopted in the present application to achieve accurate protection actions, thereby effectively reducing the occurrence of false tripping and failure to trip. With accurate protection actions, the power supply circuit can promptly cut off the power supply when a load anomaly occurs, such as a short circuit or overload, preventing the fault from escalating. This enhances the operational safety and reliability of equipment such as servers. It should be noted that servers typically need to supply power to multiple modules with different power ratings and functions simultaneously. Through the differentiated protection mechanism of this embodiment, each module can be precisely protected in its respective load state, thereby ensuring the stable operation of the server.

In some exemplary embodiments, the power supply branch 1 is provided with multiple first protection components 2 connected in parallel.

In this embodiment, the multiple first protection components 2 are connected in parallel in the same power supply branch 1. The multiple first protection components 2 share the current and voltage of the power supply branch 1, but each of these protection components can independently detect the power supply parameter and trigger protection actions. When the power supply parameter (such as current, voltage, etc.) of the power supply branch 1 changes, each of the first protection component 2 connected in parallel will independently detect the parameter. If the parameter detected by a certain protection component reaches the set first protection threshold thereof, the control component 3 will output the first signal to drive the first protection components connected in parallel in the power supply branch 1 to disconnect the power supply branch 1. Further, the multiple first protection components 2 connected in parallel can detect the power supply parameter of the power supply branch 1 simultaneously, which increases the redundancy of detection. Even if one of these protection components malfunctions or makes a misjudgment, other protection components can still work normally and trigger protection actions, thereby improving the reliability of the entire power supply circuit.

In this embodiment, different protection thresholds can be set for each of the first protection component 2 connected in parallel, thereby realizing multi-level protection for the power supply branch 1. For example, a first protection component 2 with a low threshold can be provided to detect slight abnormal conditions, and a first protection component 2 with a high threshold can be provided to deal with severe faults. In this way, the trigger conditions for protection actions can be controlled more precisely. The first protection components 2 connected in parallel can be flexibly configured according to the characteristics of loads attached to the power supply branch 1. For complex loads (such as equipment with different power requirements), multiple protection components can be provided to deal with different types of abnormal conditions respectively, so as to better adapt to dynamic load requirements.

In addition, if a large current surge occurs, multiple first protection components 2 connected in parallel can share the current collectively. Each of these first protection components 2 will bear a portion of the current based on its own characteristics (such as resistance, conduction capacity, etc.), thereby reducing the burden on a single component. The multiple first protection components 2 connected in parallel can simultaneously monitor the abnormal conditions of the power supply branch 1. Once a component detects a large current surge and triggers a protection action, the control component 3 can quickly output a signal to cut off the power supply branch 1. Such multi-point detection mechanism can shorten the response time, cut off the power more swiftly, and prevent severe damage to the circuit caused by the large current surge.

As some embodiments, besides the protection components connected in parallel, some protection elements (such as inductors, resistors, or positive temperature coefficient resistors) can also be connected in series to further limit the current. These elements can provide additional impedance when a large current surge occurs, slowing down the rising speed of the current. For example, an inductor can be connected in series to effectively suppress the rapid change of current, thereby reducing the pressure of large current surges on the protection components connected in parallel.

In some exemplary embodiments, among the multiple first protection components 2 connected in parallel, there is at least one redundant protection component. The first protection threshold of the redundant protection component is higher than that of the main protection components. The main protection components refer to the first protection components 2 other than the redundant protection component among the multiple first protection components 2 connected in parallel.

In this embodiment, a redundant protection component is introduced. Taking one power supply branch 1 as an example, the first protection components 2 in the power supply branch 1 include a main protection component and a redundant protection component. The main protection component is the main protection element in the power supply branch 1, and the first protection threshold of the main protection component is set according to normal working conditions and load requirements. The main protection component is used to trigger protection actions and cut off the power supply branch 1 under conventional abnormal conditions (such as slight overcurrent, overvoltage, etc.). The first protection threshold of the redundant protection component is higher than that of the main protection component, which means it will not trigger protection actions under normal conditions. The redundant protection component is mainly used as a backup, and provides additional protection when the main protection component fails or cannot handle extreme abnormal conditions (such as large current surges, severe short circuits, etc.). The main protection component and the redundant protection component together form a dual protection mechanism. The main protection component is responsible for handling common abnormal conditions, while the redundant protection component provides additional protection under extreme conditions, ensuring that the power supply branch 1 can be protected under various abnormal conditions. Even if the main protection component fails to trigger a protection action due to a fault or misjudgment, the redundant protection component can still function, avoiding equipment damage or safety accidents caused by protection failure.

The redundant protection component can withstand greater current surges due to the high protection threshold thereof. In the event of the large current surge, the main protection component may be damaged or fail to respond in time due to excessive current. In such cases, the redundant protection component can trigger a protection action to cut off the power supply branch 1, thereby protecting the circuit. The main protection component and the redundant protection component connected in parallel can collectively share the current, reducing the burden on individual components. The redundant protection component can absorb more energy during a large current surge due to the high-threshold design thereof, thereby enhancing the overall surge resistance capability of the entire power supply branch 1.

In some exemplary embodiments, the first protection component 2 includes a detection module and a switching module.

The detection module provided in the power supply branch 1. A first end of the detection module is connected to the power output end of the power source, and a sampling output end of the detection module is connected to the control component 3. The detection module is configured to detect the power supply parameters of the power supply branch 1 where the detection module is located.

The switching module is provided in the power supply branch 1. A first end of the switching module is connected to a second end of the detection module, a second end of the switching module is connected to a corresponding power node, and a control end of the switching module is connected to the control component 3. The switching module is configured to turn off in response to the first signal.

In this embodiment, the first protection component 2 includes a switching module and a detection module that are designed with a separated architecture. The switching module and the detection module are connected in series in the power supply branch 1. Specifically, the first end of the switching module is connected to the second end of the detection module, the second end of the switching module is connected to the corresponding power node, and the control end of the switching module is connected to the control component 3. The detection module is provided in the power supply branch 1. The first end of the detection module is connected to the power output end of the power source, and the sampling output end of the detection module is connected to the control component 3. The detection module is configured to detect the power supply parameters (such as voltage, current, temperature, etc.) of the power supply branch 1 where the detection module is located in real time and feed back the power supply parameters to the control component 3. Specifically, the parameters can be transmitted to the control component 3 through analog signals or digital communication (such as ADC (Analog-to-Digital Converter) conversion). Based on the power supply parameters detected by the detection module, the control component 3 judges whether the power supply parameters meet the abnormal protection conditions. If yes, the control component 3 sends a first signal to the switching module in the power supply branch 1 where the detection module is located. After receiving the first signal, the switching module turns off, thereby cutting off the power supply branch 1, stopping supplying power to the load attached to the power supply branch 1, while other branches remain in normal operation. Specifically, the switching module can be an electronic fuse (efuse). These components are characterized by their high voltage tolerance and rapid response capabilities, which enable them to quickly cut off the power supply branch 1 and prevent the fault from escalating.

In this embodiment, the detection module and the switching module are configured independently to avoid mutual interference between the monitoring and execution functions. This ensures that only the faulty branch is cut off, while the non-faulty part remains unaffected. The modular design allows separate replacement of detection or switching components, reducing maintenance costs. When adding a new branch, only the module combination needs to be copied, without reconstructing the entire system. The detection signal is separated from the first signal (such as using photoelectric isolation technology), which reduces the interference of electromagnetic noise in the power supply circuit on the control logic.

In some exemplary embodiments, the detection module includes at least one sampling resistor. A first end of the at least one sampling resistor is connected to the power output end of the power source, and a second end of the at least one sampling resistor is connected to the control component 3.

In this embodiment, the detection module includes at least one sampling resistor. The first end of the sampling resistor is connected to the power output end of the power source, and the second end of the sampling resistor is connected to the control component 3. The current of the power supply branch 1 is detected through the sampling resistor. Specifically, the voltage drop across the sampling resistor is proportional to the current passing through the resistor; by detecting this voltage drop, the current of the power supply branch 1 can be calculated. The selection of the sampling resistor needs to be determined according to the current range and accuracy requirements of the power supply branch 1 to ensure the accuracy of detection.

In some exemplary embodiments, referring to FIG. 2, the detection module includes a conductive section on a board that connects the power input terminal with the power output terminal, as well as measurement points disposed at both ends of the conductive section. The measurement points are connected to the control component 3, the power input terminal is connected to the output end of the power source, the power output terminal is connected to a corresponding load. The load and the control component 3 are both disposed on the board.

In this embodiment, the detection module can sample the power supply parameters through an external sampling resistor. Alternatively, a conductive section with a preset impedance, which can be a copper trace on a printed circuit board or a dedicated metal strip, can be reserved on the board to serve as a sampling resistor. One end of the conductive section is connected to the power input terminal on the board, and the other end is connected to the power output terminal on the board. The power input terminal is connected to the power output end of the power source, and the power output terminal is connected to the corresponding load on the board. Measurement points are arranged at both ends of the conductive section, and the measurement points are respectively connected to the control component 3 through connecting wires. Specifically, the measurement points are respectively connected to the differential input ports of the control component 3 through connecting wires to eliminate lead resistance errors. The control component 3 obtains the voltage drop across the conductive section, thereby sampling the power supply parameters of the power supply branch 1. According to the target detection accuracy and current range, the length L, width W, and material (such as copper foil resistivity) of the conductive section are adjusted, and the inherent impedance of the conductive section is calculated. The dimensions of the conductive section can be set according to actual engineering requirements as long as the requirements of sampling accuracy and path loss are met, which is not specifically limited in this embodiment.

The board with the reserved conductive section is the same board on which the loads and the switching module are arranged. By reserving a conductive section with a preset impedance on the board, the occupation of board area by discrete components can be reduced, which is suitable for high-density board designs, for example server power boards. The conductive section is integrally formed with the board, avoiding problems such as desoldering or poor contact of discrete resistors caused by vibration and temperature changes. Its parasitic parameters (inductance, capacitance) are controllable, which is beneficial to signal integrity in high-frequency scenarios. Since no additional sampling resistor is required, the detection module can be flexibly arranged on the board to adapt to different circuit designs and layout requirements.

In some exemplary embodiments, the conductive section is composed of at least one conductive layer on the board.

In this embodiment, the conductive section can be composed of one conductive layer or multiple conductive layers on the board. The conductive layer can specifically be a copper layer or a layer made of other conductive materials on the board. Copper and other conductive materials have excellent electrical conductivity, which can ensure efficient current transmission in the conductive section and reduce energy loss. The conductive section can also be regarded as a current transmission channel, with the distance between two sides of the channel being width W. The channel is preferably a parallel channel. Specifically, a rectangular conductive section can be selected, and the width of the rectangular conductive section is uniform along its path to ensure the standardization of the impedance parameters of the conductive section.

In some exemplary embodiments, the conductive section is a multi-layer structure composed of multiple interconnected conductive layers. Both the power input terminal and the power output terminal are equipped with multiple interconnection vias.

In this embodiment, when the conductive section is composed of multiple interconnected conductive layers, multiple interconnection vias are provided on the power input terminal and the power output terminal. The interconnection vias are vertical channels connecting different conductive layers, allowing current to flow between different layers. Through reasonable design of the number and distribution of vias, the balanced distribution of current between layers can be ensured, avoiding overheating or damage caused by excessive current in any single layer. It can be understood that the multi-layer structure enables to arrange more circuits in a limited space, improving the integration and density of the circuit, and helping to reduce interference and crosstalk in signal transmission and improve signal integrity.

The quantity of interconnection vias is usually determined according to the current requirements of the circuit. For example, if a current of 30A needs to flow in the circuit, the quantity of vias is usually designed to be 30 or more to ensure uniform current distribution. The quantity of interconnection vias can also be appropriately reduced, but it is necessary to ensure that the balanced current distribution and circuit performance are not affected. The vias can be arranged densely or dispersedly, depending on the design requirements of the circuit and the process capabilities of the PCB manufacturer.

In some exemplary embodiments, the conductive layers forming the conductive section are arranged on layers of the board different from the power input terminal and the power output terminal, and the conductive layers forming the conductive section are connected to the power input terminal and the power output terminal through vias. Alternatively, the conductive layers forming the conductive section, the power input terminal and the power output terminal are arranged on the same layer of the board.

In this embodiment, the power input terminal and the power output terminal can specifically be a power input copper foil and a power output copper foil on the board. In this embodiment, the layout design of the conductive section, the power input terminal, and the power output terminal has a certain degree of flexibility, mainly including the following two cases.

The conductive section and the power terminals adopt a layered layout, that is, the conductive layers forming the conductive section are arranged on layers of the board different from the power input terminal and the power output terminal. In this case, the conductive layers forming the conductive section are connected to the power input terminal and the power output terminal through vias. As a common connection method in PCB design, vias can realize electrical connection between different layers, ensuring that current can be smoothly transmitted from the power input terminal to the conductive section, then from the conductive section to the power output terminal, and further connected to a corresponding load. Such layered layout is conducive to optimizing the space utilization of the board, especially in high-density board designs. It can effectively relieve the wiring pressure on the same layer and provide more space for the layout of other components and circuits.

The conductive section and the power terminals are arranged on the same layer, that is, the conductive layers forming the conductive section, the power input terminal and the power output terminal are arranged on the same layer of the board. In this case, the power input terminal and the power output terminal can specifically be the power input copper foil and power output copper foil on the board. The copper foil of the conductive section and the power input/output copper foil can be arranged on the same layer or different layers. When the copper foil of the conductive section has multiple layers, one layer of the copper foil of the conductive section and the power input/output copper foil can be arranged on the same layer. This same-layer layout can simplify the manufacturing process of the board in some cases, reduce the quantity of vias used, and lower potential reliability issues and manufacturing costs caused by vias. Moreover, the same-layer layout also facilitates wiring optimization and debugging during the design phase, allowing for a more intuitive observation and adjustment of the connection relationship between the conductive section and the power terminals, ensuring the efficiency and stability of the current transmission path.

In some exemplary embodiments, the conductive section includes a first side and a second side with equal lengths. The measurement points include a first measurement point disposed on the first side and a second measurement point disposed on the second side. The first measurement point is connected to a first detection line, the second measurement point is connected to a second detection line, and the first detection line and the second detection line are connected to the control component 3 in the form of a differential pair. The first detection line and the second detection line are arranged on layers of the board different from the conductive section.

In this embodiment, the conductive section includes a first side and a second side with equal lengths. The measurement points include a first measurement point (for example, a bridge head measurement point in FIG. 2) disposed on the first side and a second measurement point (for example, a bridge tail measurement point in FIG. 2) disposed on the second side. This symmetrical layout of measurement points helps to accurately obtain the voltage drop across the conductive section, providing a reliable data basis for current calculation. The first measurement point is connected to the first detection line, and the second measurement point is connected to the second detection line. The first detection line and the second detection line are connected to the control component 3 in the form of a differential pair. The differential pair connection has excellent anti-interference performance, which can effectively improve the accuracy and stability of the detection signal. In high-speed signal transmission and precision measurement, differential signals can offset the impact of external electromagnetic interference and reduce crosstalk between signals, ensuring that the detected voltage drop signal truly reflects the current change in the conductive section.

The first detection line and the second detection line are arranged on layers of the board different from the conductive section, which can effectively utilize the vertical space of the board and avoid wiring conflicts between the conductive section and the detection lines on the same layer. Especially in high-density board designs, this layered layout provides more flexibility for the arrangement of other components and circuits, facilitating the realization of complex circuit designs and compact device layouts. It can be understood that a large working current flows through the conductive section, while the detection lines transmit weak signals for detection. By arranging the conductive section and the detection lines in different layers, the mutual inductance effect of current changes in the conductive section on the detection line signals can be significantly reduced, noise interference can be reduced, thereby improving the accuracy of current detection. In addition, the layered layout also helps to reduce mutual interference between the detection lines, ensuring the transmission quality of differential signals. Furthermore, during the manufacturing process, the layered layout is conducive to optimizing the PCB manufacturing process. The functional division of different layers is clear, which can improve production efficiency and yield. Moreover, the direct contact between the detection lines and the high-current conductive section is reduced, thereby lowering the risk of electrical faults caused by manufacturing defects or during use, improving the overall reliability of the board.

In some exemplary embodiments, the multiple power supply branches 1 include a target power supply branch that contains a sub-branch with potential fault risks.

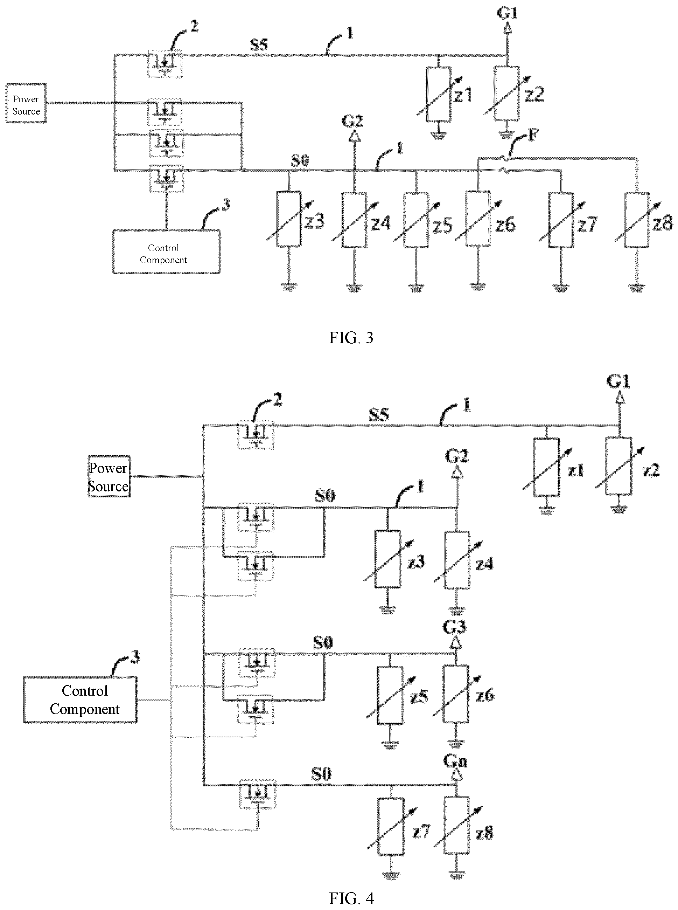

Referring to FIG. 3, the power supply circuit further includes at least one second protection component F.

The second protection component F is connected in series to the sub-branch with potential fault risks in the target power supply branch. The second protection component F is configured to disconnect when the power supply parameter of the sub-branch with potential fault risks where the second protection component F is located reaches its corresponding second protection threshold.

In this embodiment, the power supply branch 1 including a sub-branch with potential fault risks is identified as the target power supply branch, and the second protection component F is connected in series in the target power supply branch. When the power supply parameter (for example, current) of the sub-branch with potential fault risks reaches the second protection threshold of the second protection component F, the second protection component F will disconnect to cut off the power supply to the sub-branch. The protection threshold of the second protection component F is generally lower than that of the first protection component 2 (efuse), enabling it to more sensitively detect smaller fault currents.

It can be understood that the low protection threshold of the second protection component F enables it to detect minor fault currents more sensitively, thereby triggering protective actions faster and reducing the impact of faults on the circuit. By adding the second protection component F to the sub-branch with potential fault risks, only the faulty sub-branch is cut off without affecting the normal operation of the entire circuit, thus narrowing the scope of fault impact. The first protection component 2 (efuse) and the second protection component F (additional fuse or efuse) together form a multi-level protection mechanism, providing more comprehensive protection.

In specific applications, considering the sequential power-on requirement of different power rails during server startup, the S0 sequencing branch typically carries a high load power consumption. By adding the second protection component F to the sub-branch with potential fault risks, high-load branches can be effectively protected, avoiding power outage of the entire branch due to local faults.

In some exemplary embodiments, the sub-branch with potential fault risks includes a sub-branch of the power supply branch 1 provided with pluggable loads and/or a sub-branch provided with more than a preset number of capacitors.

Pluggable loads (such as pluggable modules or devices) may cause instantaneous changes in current or voltage during plugging and unplugging, thereby increasing the risk of faults. For example, plug-in and unplugging operations may trigger short circuits, overcurrent, or overvoltage conditions. In view of this, the sub-circuit in the power supply branch 1 equipped with pluggable loads is identified as a sub-circuit with potential fault risks in this embodiment. Since instantaneous short circuits or overcurrent may occur during plugging and unplugging of loads, the second protection component F is added to these sub-branches, so as to quickly cut off the power supply to the sub-branch when a fault occurs. Therefore, the fault is prevented from spreading to the entire power supply branch 1. Capacitors may cause significant impacts on the circuit during charging and discharging. If the quantity of capacitors in a sub-circuit exceeds a predetermined value, it may lead to large current surges or voltage fluctuations in the circuit when the circuit is started or when there are load changes, thereby increasing the risk of faults. In view of this, the sub-branch in the power supply branch 1 equipped with more capacitors than a preset number is identified as a sub-branch with potential fault risks. Since a large number of capacitors may cause significant impacts on the circuit during charging and discharging, leading to instantaneous changes in current or voltage, the second protection component F is added to these sub-branches, so as to more sensitively detect abnormalities and cut off the power supply in a time to protect the circuit.

The protection threshold of the second protection component F is generally lower than that of the first protection component 2, so as to more sensitively detect minor fault currents. For example, for sub-branches with pluggable loads, a lower overcurrent protection threshold can be set; for sub-branches including a large number of capacitors, a lower overvoltage protection threshold can be set.

In an exemplary embodiment, the second protection component F includes a fuse.

In this embodiment, a fuse is a simple and effective overcurrent protection device. When the current passing through the fuse exceeds its rated value, the fuse element inside the fuse will quickly melt, thus cutting off the circuit. This cutting-off process is physical, once the current exceeds the threshold, the fuse acts immediately, ensuring reliable circuit disconnection under overcurrent conditions. Compared to electronic protection devices (such as e-fuses), the operation of a fuse is primarily based on the physical melting principle, making it immune to electromagnetic interference or signal noise. Thus, fuses is more reliable in complex electromagnetic environments.

The solution of using a fuse as the second protection component F offers advantages such as low cost, high reliability, excellent thermal stability, and strong fault isolation capability. This solution can effectively handle overcurrent and short-circuit problems in sub-branch with potential fault risks, reduce damage to the entire system caused by faults, and improve the reliability and safety of the power supply circuit. In practical applications, fuses can be used in combination with electronic protection devices (such as efuses) to form a multi-level protection mechanism, thereby further enhancing the protection capability of the system.

In some exemplary embodiments, the first protection component 2 includes an electronic fuse. A first end of the electronic fuse is connected to the power output end of the power source, a second end of the electronic fuse is connected to the corresponding power node, and both the control end and the sampling end of the electronic fuse are connected to the control component 3. A sampling resistor and a switching transistor are integrated in the electronic fuse. A first end of the sampling resistor is connected to the first end of the electronic fuse, a second end of the sampling resistor is connected to a first end of the switching transistor, a second end of the switching transistor is connected to the second end of the electronic fuse, a control end of the switching transistor is connected to the control end of the electronic fuse, and the sampling end of the electronic fuse is configured to output a voltage signal across the sampling resistor; the power supply parameter of the power supply branch 1 where it is located includes the voltage signal.

In this embodiment, a monolithic integrated electronic fuse can be selected, which is integrated with a sampling resistor and a switching transistor, that is, the sampling resistor and the switching transistor in this embodiment adopt an integrated design. The sampling end of the electronic fuse outputs a voltage signal across the sampling resistor, which is used to monitor the current through the electronic fuse. When the current exceeds a preset value, the control component 3 triggers the switching transistor to turn off through the control end, thereby cutting off the current and protecting the circuit. This embodiment can reduce the use of precision resistors and controllers, thereby decreasing the area occupied by components on the board.

In some exemplary embodiments, as shown in FIG. 4, the quantity of power supply branches 1 is greater than 2. The power nodes in FIG. 4 include a first power node G1, a second power node G2, a third power node G3... an nth power node Gn. In FIG. 4, 8 loads are shown, that is, the first load z1 and the second load z2 connected to the first power node G1, the third load z3 and the fourth load z4 connected to the second power node G2, the fifth load z5 and the sixth load z6 connected to the third power node G3, and the seventh load z7 and the eighth load z8 connected to the nth power node Gn.

In this embodiment, the power supply circuit can be divided into multiple power supply branches 1 according to different loads, and the quantity of power supply branches 1 is greater than 2. Each power supply branch 1 is independently equipped with an efuse protection device. The abnormal protection current threshold of each power supply branch 1 will be reduced, enabling independent fault protection for individual branches. When a fault occurs in the circuit, the lower protection threshold in each branch allows for more sensitive and rapid protective action.

In some exemplary embodiments, among the multiple power supply branches 1, at least two power supply branches 1 have different power-on sequences.

In this embodiment, different sequences for power rails are required during the startup of a server, for example, at least two different sequences, that is, S5 sequence (second sequence) and S0 (first sequence) are required. Thus, the power supply circuit is divided into at least two power supply branches 1. As shown in FIG. 4, the power nodes are mainly divided into two sequences: S0 and S5. The first power node G1 corresponds to the S5 sequence, and the other power nodes correspond to the S0 sequence. Generally, the S5 sequence is controlled by hardware timing, while the S0 sequence is controlled by timing commands sent by the control component 3. For each power supply branch 1, the current-carrying capacity and abnormal current protection threshold of the electronic fuse are determined according to the size of the load attached to the power node following the power supply branch 1.

In some exemplary embodiments, the control component 3 is further configured to sequentially output a second signal to the first protection components 2 in the N power supply branches 1 according to the power-on sequences of the N power supply branches 1; where N is less than or equal to a total number of power supply branches 1.

The first protection component 2 is further configured to turn on in response to the second signal.

In this embodiment, the power-on sequences of the respective power supply branches 1 differ. A second signal is sequentially output to the first protection components 2 in the N power supply branches 1 according to these distinct power-on sequences, thereby controlling the sequential power-up of respective power supply branches 1 and improving power-on safety.

In some exemplary embodiments, the power-on sequences include a first sequence and a second sequence, and the load power consumption corresponding to the first sequence is greater than the load power consumption corresponding to the second sequence.

The quantity of first protection components 2 in the power supply branch 1 corresponding to the first sequence is greater than the quantity of first protection components 2 in the power supply branch 1 corresponding to the second sequence.

It can be understood that the S5 sequence generally corresponds to a low load power consumption, and is usually used to power low-power devices or modules. Since the load power consumption is low, usually only one first protection component 2 is sufficient to meet the power supply requirements. By using a single switching component, the circuit design can be simplified and costs can be reduced. The S0 sequence corresponds to high load power consumption, and is usually used for power high-power devices or modules, thus at least one first protection component 2 is used. Since the load power consumption is high, more switching components are required to meet the power supply requirements. For example, multiple first protection components 2 need to be used in parallel or in series to provide sufficient current capacity and redundant protection. Multiple switching components can distribute the current, reduce the burden on individual components, and improve the reliability and safety of the system.

By configuring different numbers of switching components according to load power consumption for different power-on sequences (the first sequence and the second sequence), the power supply circuit can better adapt to different load requirements, improve system reliability, and optimize costs.

In some exemplary embodiments, the power supply circuit further includes a first filtering and energy storage component and a second filtering and energy storage component.

A first end of the first filtering and energy storage component is connected to the power output end of the power source, and a second end of the first filtering and energy storage component is connected to the first protection component 2 in a corresponding power supply branch 1. The first filtering and energy storage component is configured to filter the output voltage of the power supply and store energy, and includes multiple electrolytic capacitors connected in parallel.

A first end of the second filtering and energy storage component is connected to the first protection component 2, and a second end of the second filtering and energy storage component is connected to the corresponding load.

In this embodiment, to ensure the stability of the power supply, an electrolytic capacitor-based filtering and energy storage component can be added either before or after the first protection assembly 2. This component may include multiple electrolytic capacitors connected in parallel and/or series. It is understood that the electrolytic capacitors in the first filtering and energy storage component can filter the output voltage of the power supply, reducing ripple and noise in the voltage. Electrolytic capacitors have a relatively low equivalent series resistance, enabling effective filtering of high-frequency noise. Electrolytic capacitors can store electrical energy within a short period due to large capacitance values thereof. When the output voltage of the power supply experiences transient fluctuations, these capacitors can release stored energy to maintain voltage stability in power supply branch 1. On the basis of the first filtering and energy storage component, the second filtering and energy storage component can further eliminate voltage ripple and noise in power supply branch 1, ensuring even more stable voltage at the load end and providing local energy storage for the load. When transient current changes occur at the load end, the second filtering and energy storage component can respond rapidly to deliver the required electrical energy, preventing voltage drop.

The first filtering and energy storage component and the second filtering and energy storage component work together to effectively reduce ripples and noise in the output voltage of the power supply, enhancing voltage stability. When the output voltage of the power supply experiences transient fluctuations, the filtering and energy storage components can release the stored electrical energy to maintain the voltage stability of the power supply branch 1, thereby improving the anti-interference capability of the system.

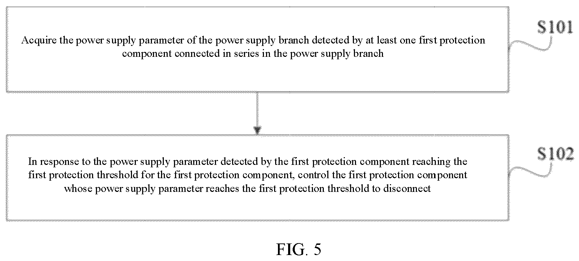

In a second aspect, the present application further provides a monitoring method for a power supply circuit, applied to the power supply circuit described above. The power supply circuit includes multiple power supply branches. Referring to FIG. 5, the method includes steps of:
S101, acquiring the power supply parameter of the power supply branch detected by at least one first protection component connected in series in the power supply branch;
S102, in response to the power supply parameter detected by the first protection component reaching the first protection threshold of the first protection component, controlling the first protection component whose power supply parameter reaches the first protection threshold to disconnect.

In a third aspect, the present application further provides a server including at least one power source and the aforementioned power supply circuit connected to the power source.

A power supply circuit, including:
multiple power supply branches, where a first end of each of the power supply branches being connected to a power output end of a power source and a second end of each of the power supply branches being connected to a corresponding power node;
at least one first protection component connected in series in each of the power supply branches, where the first protection component is configured to: detect power supply parameters of the power supply branch where the first protection component is located, and disconnect in response to a first signal; a quantity of the first protection components in the power supply branches and first protection thresholds of the first protection components are determined based on power supply requirements of loads attached to the power nodes connected to the power supply branches; and
a control component connected to at least one first protection component in at least one power supply branch, where the control component is configured to output the first signal in response to the power supply parameter detected by the first protection component reaching the first protection threshold of the first protection component.

In some exemplary embodiments, each of the power supply branches is provided with multiple first protection components connected in parallel.

In some exemplary embodiments, the multiple first protection components connected in parallel include at least one redundant protection component. The first protection threshold of the redundant protection component is greater than the first protection threshold of a main protection component, where the main protection component is the first protection components other than the redundant protection component among the multiple first protection components connected in parallel.

In some exemplary embodiments, the first protection component includes:
a detection module, provided in the power supply branch and configured to detect the power supply parameters of the power supply branch where the detection module is located, a first end of the detection module being connected to the power output end of the power source and a sampling output end of the detection module being connected to the control component; and
a switching module, provided in the power supply branch and configured to disconnect in response to the first signal, a first end of the switching module being connected to the second end of the detection module, a second end of the switching module being connected to the corresponding power node, and a control end of the switching module being connected to the control component.

In some exemplary embodiments, the detection module includes at least one sampling resistor. A first end of the at least one sampling resistor is connected to the power output end of the power source, and a second end of the at least one sampling resistor is connected to the control component.

In some exemplary embodiments, the detection module includes a conductive section on a board and measurement points disposed at both ends of the conductive section. The measurement points are connected to the control component. The conductive section connects a power input terminal with a power output terminal. The power input terminal is connected to the output end of the power source, the power output terminal is connected to a corresponding load, and both the loads and the control component are disposed on the board.

In some exemplary embodiments, the switching module includes a switching transistor. A first end of the switching transistor is connected to the second end of the detection module, a second end of the switching transistor is connected to the corresponding power node, a control end of the switching transistor is connected to the control component, and the switching transistor is configured to turn off in response to the first signal.

In some exemplary embodiments, the multiple power supply branches include a target power supply branch having a sub-branch with potential fault risks.

The power supply circuit further includes at least one second protection component that is connected in series to the sub-branch with potential fault risks of the target power supply branch. The second protection component is configured to disconnect in response to the power supply parameter of the sub-branch with potential fault risks, where the second protection component is located, reaches the second protection threshold of the second protection component.

In some exemplary embodiments, the sub-branch with potential fault risks includes a sub-branch, among the power supply branch, that is provided with pluggable loads and/or a sub-branch that is provided with more than a preset number of capacitors.

In some exemplary embodiments, the second protection component includes a fuse.

In some exemplary embodiments, the first protection component includes an electronic fuse. A first end of the electronic fuse is connected to the power output end of the power source, a second end of the electronic fuse is connected to the corresponding power node, and both the control end and the sampling end of the electronic fuse are connected to the control component. A sampling resistor and a switching transistor are integrated in the electronic fuse. A first end of the sampling resistor is connected to the first end of the electronic fuse, a second end of the sampling resistor is connected to a first end of the switching transistor, a second end of the switching transistor is connected to the second end of the electronic fuse, a control end of the switching transistor is connected to the control end of the electronic fuse, and the sampling end of the electronic fuse is configured to output a voltage signal across the sampling resistor. The power supply parameter of the power supply branch includes the voltage signal.

In some exemplary embodiments, the quantity of the power supply branches is greater than 2.

In some exemplary embodiments, at least two power supply branches among the multiple power supply branches have different power-on sequences.

In some exemplary embodiments, the control component is further configured to sequentially output a second signal to the first protection components in N power supply branches according to the power-on sequences of the N power supply branches, where N is less than or equal to the total number of power supply branches. The first protection component is further configured to turn on in response to the second signal.

In some exemplary embodiments, the power-on sequences include a first sequence and a second sequence, and a load power consumption corresponding to the first sequence is greater than load power consumption corresponding to the second sequence. The quantity of first protection components in the power supply branch corresponding to the first sequence is greater than the quantity of first protection components in the power supply branch corresponding to the second sequence.

In some exemplary embodiments, the power supply circuit further includes:

a first filtering and energy storage component, configured to filter the output voltage of the power supply and store energy, a first end of the first filtering and energy storage component being connected to the power output end of the power source, and a second end of the first filtering and energy storage component being connected to the first protection component in the corresponding power supply branch.

In some exemplary embodiments, the first filtering and energy storage component includes multiple electrolytic capacitors connected in parallel.

In some exemplary embodiments, the power supply circuit further includes a second filtering and energy storage component. A first end of the second filtering and energy storage component is connected to the first protection component, and a second end of the second filtering and energy storage component is connected to a corresponding load.

Those skilled in the art may further realize that the units and algorithm steps of the examples described in conjunction with the embodiments disclosed herein can be implemented by electronic hardware, computer software, or a combination of the two. To clearly illustrate the interchangeability of hardware and software, the composition and steps of each example have been generally described in terms of functions in the above description. Whether these functions are performed by hardware or software depends on the specific application and design constraints of the technical solution. Skilled technicians can use different methods to implement the described functions for each specific application, but such implementation should not be considered beyond the scope of the present application.

The power supply circuit, the monitoring method for the same, and the server provided by the present application have been described in detail above. Specific examples are used herein to illustrate the principles and implementation methods of the present application, and the descriptions of the above embodiments are only used to help understand the method and core idea of the present application. It should be noted that for those of ordinary skill in the art, without departing from the principle of the present application, several improvements and modifications can also be made to the present application, and these improvements and modifications also fall within the protection scope of the claims of the present application.

## Claims

1. A power supply circuit, comprising:
multiple power supply branches, wherein a first end of each of the power supply branches being connected to a power output end of a power source, and a second end of each of the power supply branches being connected to a corresponding power node;
at least one first protection component connected in series in each of the power supply branches, wherein the first protection component is configured to: detect power supply parameters of the power supply branch where the first protection component is located, and disconnect in response to a first signal; a quantity of first protection components in the power supply branch and a first protection threshold of the first protection components are determined based on power supply requirements of loads attached to the power node connected to the power supply branch; and
a control component connected to at least one first protection component in at least one power supply branch, wherein the control component is configured to output the first signal in response to the power supply parameters detected by the first protection component reaching the first protection threshold of the first protection component.

2. The power supply circuit according to claim 1, wherein each of the power supply branches is provided with multiple first protection components connected in parallel.

3. The power supply circuit according to claim 2, wherein the multiple first protection components connected in parallel comprise at least one redundant protection component; the first protection threshold of the redundant protection component is greater than the first protection threshold of a main protection component, wherein the main protection component is the first protection components other than the redundant protection component among the multiple first protection components connected in parallel.

4. The power supply circuit according to claim 1, wherein the first protection component comprises:
a detection module, provided in the power supply branch and configured to detect the power supply parameters of the power supply branch where the detection module is located, a first end of the detection module being connected to the power output end of the power source and a sampling output end of the detection module being connected to the control component; and
a switching module, provided in the power supply branch and configured to disconnect in response to the first signal, a first end of the switching module being connected to the second end of the detection module, a second end of the switching module being connected to the corresponding power node, and a control end of the switching module being connected to the control component.

5. The power supply circuit according to claim 4, wherein the detection module comprises at least one sampling resistor, a first end of the at least one sampling resistor being connected to the power output end of the power source, and a second end of the at least one sampling resistor being connected to the control component.

6. The power supply circuit according to claim 4, wherein the detection module comprises a conductive section on a board and measurement points disposed at both ends of the conductive section; the measurement points are connected to the control component; the conductive section connects a power input terminal with a power output terminal, the power input terminal is connected to the output end of the power source, the power output terminal is connected to a corresponding load; both the load and the control component are disposed on the board.

7. The power supply circuit according to claim 4, wherein the switching module comprises a switching transistor, a first end of the switching transistor being connected to the second end of the detection module, a second end of the switching transistor bring connected to the corresponding power node, a control end of the switching transistor being connected to the control component, wherein the switching transistor is configured to turn off in response to the first signal.

8. The power supply circuit according to claim 1, wherein the multiple power supply branches comprise a target power supply branch having a sub-branch with potential fault risks;
the power supply circuit further comprises at least one second protection component that is connected in series to the sub-branch with potential fault risks of the target power supply branch, wherein the second protection component is configured to disconnect in response to the power supply parameter of the sub-branch with potential fault risks, where the second protection component is located, reaches a second protection threshold of the second protection component.

9. The power supply circuit according to claim 8, wherein the sub-branch with potential fault risks comprises a sub-branch, among the power supply branches, that is provided with pluggable loads and/or a sub-branch that is provided with more than a preset number of capacitors.

10. The power supply circuit according to claim 8, wherein the second protection component comprises a fuse.

11. The power supply circuit according to claim 1, wherein the first protection component comprises an electronic fuse, a first end of the electronic fuse being connected to the power output end of the power source, a second end of the electronic fuse being connected to the corresponding power node, and both the control end and the sampling end of the electronic fuse being connected to the control component; a sampling resistor and a switching transistor are integrated in the electronic fuse, a first end of the sampling resistor being connected to the first end of the electronic fuse, a second end of the sampling resistor being connected to a first end of the switching transistor, a second end of the switching transistor being connected to the second end of the electronic fuse, a control end of the switching transistor being connected to the control end of the electronic fuse, and the sampling end of the electronic fuse is configured to output a voltage signal across the sampling resistor, wherein the power supply parameter of the power supply branch comprise the voltage signal.

12. The power supply circuit according to claim 1, wherein the quantity of the power supply branches is greater than 2.

13. The power supply circuit according to claim 1, wherein at least two power supply branches among the multiple power supply branches have different power-on sequences.

14. The power supply circuit according to claim 13, wherein the control component is further configured to sequentially output a second signal to the first protection components in N power supply branches according to the power-on sequences of the N power supply branches, wherein N is less than or equal to a total number of power supply branches;
the first protection component is further configured to turn on in response to the second signal.

15. The power supply circuit according to claim 13, wherein the power-on sequences comprise a first sequence and a second sequence, and a load power consumption corresponding to the first sequence is greater than load power consumption corresponding to the second sequence;
the quantity of first protection components in the power supply branch corresponding to the first sequence is greater than the quantity of first protection components in the power supply branch corresponding to the second sequence.

16. The power supply circuit according to claim 1, wherein the power supply circuit further comprises:
a first filtering and energy storage component, configured to filter the output voltage of the power supply and store energy, a first end of the first filtering and energy storage component being connected to the power output end of the power source, and a second end of the first filtering and energy storage component being connected to the first protection component in the corresponding power supply branch.

17. The power supply circuit according to claim 16, wherein the first filtering and energy storage component comprises multiple electrolytic capacitors connected in parallel.

18. The power supply circuit according to claim 1, further comprising:
a second filtering and energy storage component, a first end of the second filtering and energy storage component being connected to the first protection component, and a second end of the second filtering and energy storage component being connected to a corresponding load.

19. A monitoring method for a power supply circuit, applied to the power supply circuit according to any one of claims 1-18, the power supply circuit comprising multiple power supply branches, the monitoring method comprises:
acquiring power supply parameters of each of the power supply branches, wherein the power supply parameters are detected by at least one first protection component connected in series in the power supply branch; and
in response to the power supply parameters detected by the first protection component reaching the first protection threshold of the first protection component, controlling the first protection component whose power supply parameters reach the first protection threshold to disconnect.

20. A server, comprising at least one power source and the power supply circuit according to any one of claims 1-18, wherein the power supply circuit is connected to the power source.
